# EUROPEAN PATENT SPECIFICATION

(11) **EP 0 963 025 B1**
(45) Date of publication and mention of the grant of the patent: **13.01.2010**
(21) Application number: 99660092.0
(22) Date of filing: 27.05.1999
(51) Int. Cl.: H02H 3/38, H02H 7/26

(54) **Faulted feeder detection in earth fault in electricity distribution network**
Detektion eines fehlerhaftes elektrisches Leistungskabels bei Erdschluss in einem elektrischen Verteilernetz
Détecteur de ligne d'alimentation électrique défectueux pour défaut à la terre dans un réseau de distribution électrique

(30) Priority: 02.06.1998 FI 981248
(43) Date of publication of application: 08.12.1999
(73) Proprietor: ABB OY, 00380 Helsinki (FI)
(72) Inventor: Nymark, Kaj, 65100 Vaasa (FI); Linqvist, Grels, 65100 Vasa (FI)
(74) Representative: Peltonen, Antti Sakari

(56) References cited:
- WO-A-98/20356

## Description

### BACKGROUND OF THE INVENTION

The invention relates to a method for detecting a faulted feeder in an earth fault situation in an electricity distribution network, the electricity distribution network being multi-phased and comprising at least one supply point having at least two feeders, the method comprising the steps of measuring voltage between a star point of the electricity distribution network and earth, i.e. zero voltage or a variable in a known phase shift therewith, such as star point impedance current or supply zero current, measuring feeder-specifically a sum current of feeder phases, i.e. zero current, comparing feeder-specifically a phase angle of the feeder zero current with a phase angle of zero voltage, detecting a feeder faulted if the phase angle of the feeder zero current is within a given predetermined range when compared with the phase angle of zero voltage or of the variable in a known phase shift therewith.

Earth faults, in which some phase of the feeder comes into contact with earth, constitute a considerable part of all faults in the electricity distribution networks. Earth faults are caused, for instance, by cable insulation failures or outside factors such as a tree falling on an overhead line. The aim of the earth fault protection is to eliminate a potentially hazardous fault from the network as soon as possible, however, in such a manner that the electricity supply to the customers is interfered with as little as possible. It is essential in this case that only the faulted feeder is disconnected from the network and the electricity supply of the rest continues without interruptions.

Generally, the electricity distribution network is isolated from earth or earthed at its star point through an arc-suppression coil or resistance. In a network isolated from earth, a fault current path closes via earth capacitances of healthy lines, since the network star point is isolated from earth and does not provide a return path for the fault current. In a compensated network, one or more arc-suppression coils, i.e. Petersen coils, are connected to the network star point. The purpose of the arc-suppression coil is to cause at fault point an inductive current, which is opposite in direction as compared with the capacitive earth-fault current. Hence the current of the fault point is reduced. In an ideal case, the arc-suppression coil compensates for the total capacitive earth-fault current, whereby only a low resistive residual current, resulting from arc-suppression coil losses and network leak resistances, remains at the fault point. However, normally the arc-suppression coil cannot be adjusted to full compensation, since the resulting resonance of the arc-suppression coil and capacitances excessively increases the zero voltage at the healthy state. The more symmetric the network, the lower the increase in the zero voltage at the healthy state. Compensation can be carried out either in a centralized or in a distributed manner. In centralized compensation, the arc-suppression coil is located at a substation and, in general, it is automatically adjustable. In distributed compensation, small compensation units are located in the network in a decentralized manner. Thus the compensation capacity changes with the network switching conditions. In a network earthed via resistance a fault current path closes partly via earth capacitances of healthy lines and partly via earth resistance. In a network earthed through arc-suppression coil, it is possible in some cases to use a resistor connected in parallel with the arc-suppression coil. Moreover, it can be stated that the arc-suppression coil as such causes a slight resistive component in the earth-fault current owing to the coil's own resistance.

Prior art selective earth-fault protection is implemented by using so-called directional earth-fault relays. The operation of the directional earth-fault relays is based on measuring a phase angle between the network zero voltage and feeder zero currents appearing under a fault condition. Zero voltage refers here to the voltage between the star point of the electricity distribution network and an earth point, i.e. the sum of the phase voltages, and zero current refers to the sum current of phase currents at some point of the system. Zero voltage is almost equal all over the system, whereas zero current varies depending on the measuring point. In the following, it is assumed that the positive direction of zero current is from a line towards a busbar. Furthermore, unless otherwise stated, a positive phase angle between zero voltage and zero current refers that the zero voltage leads the zero current in phase. Correspondingly, a negative sign indicates that the zero voltage lags behind the zero current in phase.

The phase angle of zero current of a healthy feeder is approximately 90° behind the phase angle of the network zero voltage. This phase difference is not dependent on a star point treatment method. Use of distributed compensation for earth-fault current is an exception, when a resistor is connected in parallel with the arc-suppression coil. The resistor produces in the zero current an effective component which may increase the zero current angles of healthy feeders in comparison with zero voltage by a few tens of degrees from the above-mentioned value of 90°.

Instead, the phase angle between the zero current of a faulted feeder and the network zero voltage depends greatly on the network star point treatment method. If the star point is isolated from earth, the zero current is 90° ahead of the zero voltage. In networks earthed through resistors the phase difference depends on the relation between the magnitudes of the resistive earth-fault current fed by the resistor and the capacitive earth-fault current fed by network earth capacitances, and the phase angle of zero current is 0 to 90° ahead of the phase angle of zero voltage. In the network earthed via arc-suppression coil the phase difference is dependent on the relation between the magnitudes of reactance formed by the arc-suppression coil's inductive reactance and reactance formed by the network's total earth capacitance. If the arc-suppression coil's reactance exceeds the network's capacitive reactance, the zero current is ahead of the zero voltage in phase. If the arc-suppression coil's reactance is less than the network's capacitive reactance, the zero current lags behind the zero voltage in phase. If the network's capacitive reactance and the arc-suppression coil's inductive reactance are equal, the zero current and the zero voltage are in the same phase.

Prior art earth-fault relays generally provide so-called direction angle setting, by means of which it is possible to take into account the network star point treatment method and thus to ensure selective earth-fault protection. The direction angle has a form: α±β, where α is the direction angle proper and β determines the width of a so-called tripping sector, i.e. the limits within which a release of a faulted feeder takes place. In accordance with prior art, β is about 70° to 88°, whereby the tripping sector is <180°. The direction angle α is set in accordance with the treatment method of the network star point, and in general, in a network provided with an arc-suppression coil the value is set at 0°, in a network isolated from earth -90° and in a network earthed via resistance -30° or -60°, for instance.

A such earth-fault relay is described in the document EP0 568471."

A problem with the above-described arrangement is that the direction angle setting of relays has to be changed immediately, when the arc-suppression coil or earthing resistor is switched on or off in the network. The direction angle can be changed either manually or automatically. Manual change of the direction angle is performed either on site or by changing the relay settings by remote control. Automatic change of the direction angle takes place either by wiring auxiliary contact data of the arc-suppression coil or earthing resistor switch to a logic input of the relay or by transmitting the auxiliary contact data as a message through a substation serial bus. If the direction angle is changed manually, there is a danger that the change will be neglected. The change also calls for expertise and time, so it cannot be effected in real-time. As a consequence, the relay may be set incorrectly for a long time. Automatic change in turn renders the system more complicated and thus more susceptible to faults. Moreover, a section of the network may be at times isolated from earth and at times earthed or compensated, due to changes in switching conditions elsewhere in the network. In this case, to control relay settings, a network data system would be needed. Such system is not necessarily available and to acquire one involves considerable costs.

In addition to common earth faults, so-called restriking earth faults occur particularly in the compensated network. A restriking earth fault is produced, for instance, in an underground cable sheath, in which an electric arc is quenched and then it restrikes again when full voltage is restored to the fault point. Breakdowns of restriking earth faults generate narrow zero current peaks, which are broadened close to network frequency with an analogue filter of the protective relay. The protective relay treats the formed network-frequency zero current signals in the same manner as those relating to a common earth fault. Operation with earth-fault relay characteristics directed in accordance with a prior art solution may be non-selective for restriking earth faults because of the random nature of the restriking earth fault, whereby a measured phase angle may fall outside the operating sector of the prior art directional relay. The faulted feeder is not necessarily tripped off and hence a zero voltage relay or an undirected zero current relay serving as backup protection of the earth-fault relays trips off all feeders non-selectively.

### BRIEF DESCRIPTION OF THE INVENTION

The object of the invention is to provide a method that solves the above-described problems. This is achieved with a method, which is characterized in that a given predetermined range is set to substantially exceed 180° and the same predetermined range can be used for detecting a faulted feeder at least in two of the following alternative star point treatment methods in an electricity distribution network: a network isolated from earth, a network earthed via resistance at the star point, a network provided with an arc-suppression coil of earth-fault current or a combination of the two previous ones.

The invention is based on expanding the operational area of a directed earth-fault relay such that it can be applied to at least two alternative treatment methods of the network star point without changing settings.

The method and system of the invention has an advantage that no direction angle setting of the relay is needed, even though the earthing method of the star point would be changed. This facilitates and simplifies the use of the network, decreases necessary investments and increases operational reliability of the earth-fault protection. Furthermore, a wider operational area improves the reliability of the eafth-fault protection in restriking earth faults and in earth faults with high fault impendance. In a compensated network, the invention improves the reliability of the earth-fault protection in a situation where the network compensation is strongly mismatched and fault resistance is high, whereby the phase angle between zero voltage and zero current may fall outside the operating sector of the prior art directional relay.

The invention further relates to an equipment for detecting a faulted feeder in an earth fault situation in an electricity distribution network, the electricity distribution network being multi-phased and comprising at least one supply point having at least two feeders, the equipment comprising: means for measuring voltage between earth and the network star point, i.e. zero voltage, means for measuring feeder-specifically a sum current of the feeder phases, i.e. zero current, means for comparing a phase angle of the feeder zero current with a phase angle of zero voltage feeder-specifically, the equipment being arranged to detect a feeder faulted, if the phase angle of the feeder zero current as compared with the phase angle of zero voltage or of a variable in a known phase shift therewith is within a given predetermined range, whereby the equipment is **characterized in that** the equipment is arranged said predetermined range to substantially exceed 180° and to use the same predetermined range for detecting a faulted feeder in at least two of the following alternative star point treatment methods of the electricity distribution network: a network isolated from earth, a network earthed via resistance at the star point, a network provided with an arc-suppression coil of earth-fault current or a combination of the two previous ones.

With an equipment of this kind, the advantages of the method of the invention can be achieved simply and cost-effectively.

### BRIEF DESCRIPTION OF THE DRAWINGS

In the following, the invention will be described in greater detail in connection with preferred embodiments, with reference to the attached drawings, wherein
Figure 1 illustrates an earth fault in a network isolated from earth,
Figure 2 illustrates an earth fault in a compensated network,
Figure 3a illustrates zero voltage and a faulted feeder zero current in an earth fault situation in a network isolated from earth,
Figure 3b illustrates zero voltage and a faulted feeder zero current in an earth fault situation in a network earthed via resistance,
Figure 3c illustrates zero voltage and a faulted feeder zero current in an earth fault situation in a compensated network,
Figure 4a illustrates zero voltage and a healthy feeder zero current in an earth fault situation in a network isolated from earth,
Figure 4b illustrates zero voltage and a healthy feeder zero current in an earth fault situation in a network earthed via resistance,
Figure 4c illustrates zero voltage and a healthy feeder zero current in an earth fault situation in a network with distributed compensation, where an extra resistor is connected in parallel with an arc-suppression coil.

### DETAILED DESCRIPTION OF THE INVENTION

Even though the following description of one embodiment of the invention is based on commonly applied principles of medium voltage distribution networks, the invention is not restricted to any particular voltage level or network type.

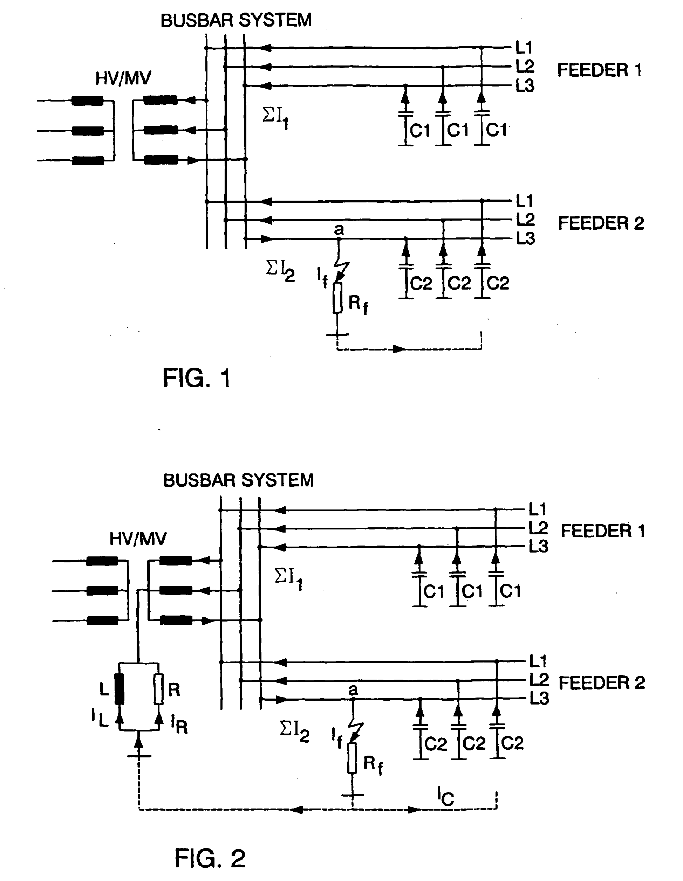

Figure 1 illustrates an earth fault in a network isolated from earth. For clarity, the figure shows a simple configuration having one transformer HV/MV feeding the network, which transformer supplies two feeders through a busbar system. The three phases of the network are indicated by symbols L1, L2 and L3. Earth fault occurs at point a and the fault point current is If. Fault resistance is indicated by Rf. C1 illustrates earth capacitance of one phase L1, L2 or L3 of a healthy feeder 1 and C2 illustrates earth capacitance of one phase L1, L2 or L3 of a faulted feeder 2. Earth-fault current passes from point a through fault resistance Rf to earth. From earth the earth-fault current passes through earth capacitances C1 and C2 of the lines via the busbar system and the transformer HV/MV back to point a. The direction of the earth-fault current at various points of the system is indicated by arrows in the lines.

Directional earth-fault protection operates as follows: zero voltage of the network is measured. Zero voltage can be measured, for instance, from an open delta winding of a voltage transformer (not shown) or from a secondary of a single-phase transformer (not shown) connected between the network star point and earth. In an earthed network and a network with centralized compensation, star point impedance current, measured with a current transformer, or supply zero current can be used as a polarizing variable instead of zero voltage. In the earthed network, said zero current is in the same phase with zero voltage and in the compensated network it lags 90° behind zero voltage. In addition, zero currents of feeders, i.e. sum currents ΣI1 and ΣI2 of phases L1, L2 and L3 of the feeders 1 and 2, are measured. Zero current can be measured, for instance, by means of sum connection or a cable current transformer (not shown). Sum connection is effected by connecting secondaries of current transformers (not shown) of different phases L1, L2 and L3 in parallel. When zero voltage and zero currents are measured, the zero current phase angle of each is compared with the phase angle of zero voltage. If the phase angle of the feeder zero current is within a given range as compared with the phase angle of zero voltage, the feeder can be considered faulted and it is disconnected from the supply. If the phase angle of zero current is outside said range, the feeder is considered healthy, i.e. it is not likely that the fault has occurred on said feeder. In general, one more prerequisite for the earth-fault protection to activate is that the zero voltage and zero current have to exceed given predetermined minimum values. Due to the network asymmetry, even in a healthy state of the network minor zero voltages and zero currents generally occur, which might cause malfunction in earth-fault protection, if the minimum value condition were not applied. For instance, a non-selective zero voltage relay, which releases all lines connected to a busbar if zero voltage exceeds a given level, can be used as backup protection for the directional relay arrangement.

Figure 2 shows a compensated network, where the above description of Figure 1 is valid where applicable. The network of Figure 2 differs from Figure 1 in that an arc-suppression coil, depicted with an inductive part L and a resistive part R, is connected to the star point of the low-voltage side of the transformer HV/MV. The arc-suppression coil can also be connected by means of a separate earthing transformer, for instance, if the star point of the transformer HV/MV were not available. In the compensated network, the earth-fault current If divides into a section IC, which passes through the earth capacitances of the lines, and a section IL+IR, which passes through the arc-suppression coil, wherein IL is an inductive component of the earth-fault current passing through the arc-suppression coil and IR is a resistive component. If the arc-suppression coil is exactly tuned, the currents IL and IC are equal and being opposite in direction, they cancel each other. Then the current If of the fault point nearly equals the resistive component IR of the arc-suppression coil.

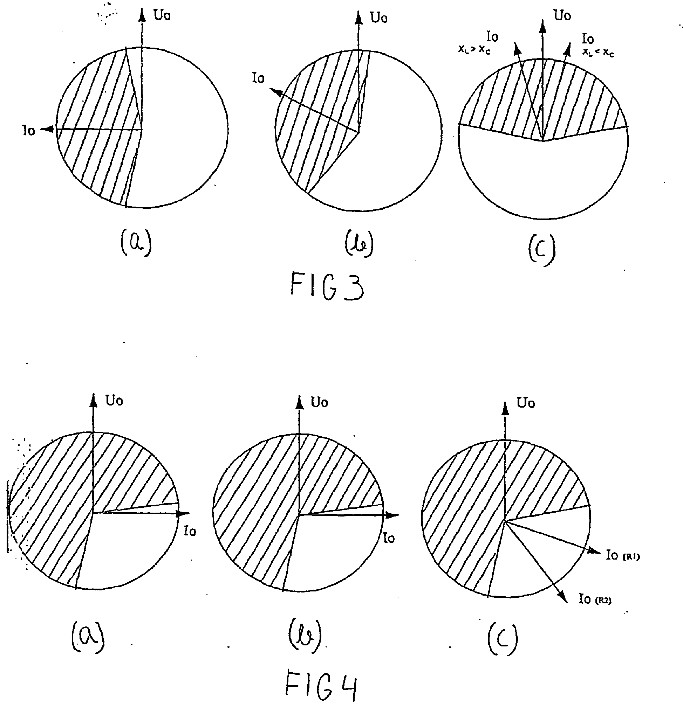

Figures 3a, 3b and 3c show phasor directions of zero voltage U0 and zero current l0 on a faulted feeder in various treatment methods of the network star point so that 3a shows phasors in the network isolated from earth, 3b in the network earthed via resistor and 3c in the compensated network. In the network isolated from earth (3a), zero current l0 is on average 90° ahead of zero voltage U0. In the network earthed via resistor (3b), the corresponding average difference of phase angle is 0° to 90° (zero current ahead of zero voltage) and in the compensated network (3c) approximately 0°. Figure 3c shows the cases where the inductive reactance XL of the arc-suppression coil exceeds the capacitive reactance XC of the earth capacitances of the lines in the network, and an opposite case where XL<XC. Figures 4a, 4b and 4c show phasor directions of zero voltage U0 and zero current l0 on a healthy feeder in various treatment methods of the network star point such that 4a shows the phasors in the network isolated from earth, 4b in the network earthed via resistor and in the network with centralized compensation, and 4c in the network with distributed compensation, where a resistor is connected in parallel with an arc-suppression coil. Zero current of a healthy feeder is almost always approximately 90° behind zero voltage. Use of distributed compensation is an exception, where an extra resistor is additionally connected in parallel with the arc-suppression coil. Unlike in Figure 2, in distributed compensation, compensation units are placed in the network in a decentralized manner, not in a centralized manner at the supply point. If the compensation unit is located on a line and it also comprises an extra resistor connected in parallel with the arc-suppression coil, which produces a resistive component in the earth-fault current passing through the compensation unit, said resistive component passes from the line to the busbar system, and as a consequence, changes the phase angle of the zero current of the feeder concerned by increasing the phase difference of said 90° by a few tens of degrees depending on the magnitude of the extra resistor. Figure 4c illustrates angles of zero currents I0(R1) and I0(R2) of a healthy feeder as compared with zero voltage, when said feeder carries a compensation unit of distributed compensation with extra resistor, having two different extra resistor values R1 and R2. It is assumed in the above that in distributed compensation the inductive reactance XLj of each line exceeds or equals the capacitive reactance XCj of said line.

In directional earth-fault relaying, tripping sectors applied in accordance with prior art in various network star point treatment methods appear from Figures 3a, 3b and 3c. Lineated sectors indicate where the zero current phasor should be, in order for the feeder to be detected faulted. In accordance with the prior art, the location of tripping sectors with respect to zero voltage varies depending on whether the network is isolated from earth (3a), earthed via resistance (3b) or compensated (3c). Moreover, the width of the tripping sector is less than 180° in accordance with the prior art.

Unlike in the above, a tripping sector which is applicable to all various network star point treatment methods is used in accordance with the method of the invention, lineated area illustrating the sector in Figures 4a, 4b and 4c. By using a tripping sector, which is suitably located with respect to zero voltage and substantially exceeds 180°, it is possible to cover with one tripping sector all probable phase angles of faulted feeder zero current with respect to the phase angle of zero voltage irrespective of the network star point treatment method. Only the area where the phase angle of zero current of a healthy feeder may be located is left outside the tripping sector. If it is desired that the tripping sector covers a network isolated from earth, network earthed via resistance, compensated network as well as network with distributed compensation, it is possible to set the limits of the tripping sector to read, for instance, -170° to +80°. If the network does not employ distributed compensation, and thus the phase angle of zero current of a healthy feeder, as compared with the phase angle of zero voltage, is very close to 90°, it is possible to set even wider limits, for instance, -260° to +80°, whereby the tripping sector would be 340°. It is to be noted that the possible boundary values of the tripping sector given herein are not to be considered to restrict the invention in any way, but they are only given as examples of the applicability of the invention. However, when trying to achieve an optimal result, it is not necessarily advantageous to make the tripping sector as wide as possible. In given situations, an excessively wide tripping sector may cause undue tripping, for instance, in connection with restriking earth faults. The applicant has found in the tests conducted that a suitable tripping sector in these situations is about-120° to +80°. In accordance with one preferred embodiment, the boundary values of the tripping sector are independently adjustable. The equipment in accordance with the invention can also be implemented in such a manner that one of the tripping sector boundary values is fixedly set to about +80° and the user can select the other boundary value, for instance, within the range of -80° to -260°.

It is obvious to the person skilled in the art that as technology advances the basic idea of the invention can be implemented in a variety of ways. The invention and its embodiments are thus not restricted to the above-described examples, but they can vary within the scope of the claims.

## Claims

1. A method for detecting a faulted feeder in an earth fault situation in an electricity distribution network, the electricity distribution network being multi-phased and comprising at least one supply point having at least two feeders, the method comprising the steps of
measuring voltage between a star point of the electricity distribution network and earth, i.e. zero voltage or a variable in a known phase shift therewith, such as star point impedance current or supply zero current,
measuring feeder-specifically a sum current of feeder phases, i.e. zero current,
comparing feeder-specifically a phase angle of the feeder zero current with a phase angle of zero voltage,
detecting a feeder faulted if the phase angle of the feeder zero current is within a given predetermined range when compared with the phase angle of zero voltage or of the variable in a known phase shift therewith,
**characterized in that**
said predetermined range is set to substantially exceed 180° and the same predetermined range can be used for detecting a faulted feeder at least in two of the following alternative star point treatment methods in an electricity distribution network: a network isolated from earth, a network earthed via resistance at the star point, a network provided with an arc-suppression coil of earth-fault current or a combination of the two previous ones.

2. A method as claimed in claim 1, **characterized in that** said predetermined range is set to cover the entire angle area where in an earth-fault situation the phase angle of zero current of a faulted feeder is likely to be located, when comparing said phase angle with that of zero voltage or of a variable in a known phase shift therewith, irrespective of the electricity distribution network being isolated from earth, earthed via resistance at the star point, provided with an earth-current arc-suppression coil or a combination of the two previous ones.

3. An equipment for detecting a faulted feeder in an earth fault situation in an electricity distribution network, the electricity distribution network being multi-phased (L1, L2 and L3) and comprising at least one supply point (HV/MV) having at least two feeders, the equipment comprising:
means for measuring voltage between earth and the network star point, i.e, zero voltage,
means for measuring feeder-specifically a sum current (ΣI1, ΣI2) of the feeder phases (L1, L2 and L3), i.e. zero current,
means for comparing a phase angle of the feeder zero current (ΣI1, ΣI2) with a phase angle of zero voltage feeder-specifically,
the equipment being arranged to detect a feeder faulted, if the phase angle of the feeder zero current (ΣI1, ΣI2) as compared with the phase angle of zero voltage or of a variable in a known phase shift therewith is within a given predetermined range, **characterized in that** the equipment is arranged to set said predetermined range to substantially exceed 180° and to use the same predetermined range for detecting a faulted feeder in at least two of the following alternative star point treatment methods of the electricity distribution network: a network isolated from earth, a network earthed via resistance at the star point, a network provided with an arc-suppression coil of earth-fault current or a combination of the two previous ones.

4. An equipment as claimed in claim 3, **characterized in that** the equipment is arranged to set said predetermined range to cover the entire angle area where in an earth-fault situation the phase angle of zero current (ΣI1, ΣI2) of a faulted feeder is likely to be located, when comparing said phase angle with that of zero voltage or of a variable in a known phase shift therewith, irrespective of the electricity distribution network being isolated from earth, earthed via resistance at the star point, provided with an earth-current arc-suppression coil or a combination of the two previous ones.

5. An equipment as claimed in claim 2 or 3, **characterized in that** the boundary angles limiting said predetermined range are independently adjustable.

## Patentansprüche

1. Verfahren zur Detektion einer fehlerhaften Speiseleitung in einem Erdschlussfall in einem elektrischen Verteilernetz, welches elektrische Verteilernetz mehrphasig ist und zumindest einen Speisepunkt mit zumindest zwei Speiseleitungen aufweist, wobei das Verfahren die Schritte aufweist:
Messen von Spannung zwischen einem Sternpunkt des elektrischen Verteilernetzes und der Erde, d.h. Nullspannung, oder einer damit in einer bekannten Phasenverschiebung vorliegenden Größe wie Sternpunktimpedanzstrom oder Nullstrom der Speisung,
Messen eines Summenstroms von Speiseleitungsphasen, d.h. Nullstroms, speiseleitungsspezifisch,
Vergleichen eines Phasenwinkels des Nullstroms der Speiseleitung mit einem Phasenwinkel von Nullspannung speiseleitungsspezifisch,
Detektieren einer Speiseleitung als fehlerhaft, falls der Phasenwinkel des Nullstroms der Speiseleitung innerhalb eines gewissen vorbestimmten Bereichs ist, wenn er mit dem Phasenwinkel von Nullspannung oder der damit in einer bekannten Phasenverschiebung vorliegenden Größe verglichen wird,
**dadurch gekennzeichnet, dass**
der vorbestimmte Bereich eingestellt ist, wesentlich 180° zu überschreiten, und derselbe vorbestimmte Bereich für Detektieren einer fehlerhaften Speiseleitung in zumindest zwei der folgenden alternativen Sternpunktbehandlungsverfahren in einem elektrischen Verteilernetz eingesetzt werden kann: ein aus Erde isoliertes Netz, ein am Sternpunkt über eine Resistanz geerdetes Netz, ein mit einer Erdschlusslöschspule von Erdschlussstrom versehenes Netz oder eine Kombination der zwei vorherigen.

2. Verfahren nach Anspruch 1, **dadurch gekennzeichnet, dass** der vorbestimmte Bereich eingestellt ist, den ganzen Winkelbereich zu bedecken, wo der Phasenwinkel von Nullstrom einer fehlerhaften Speiseleitung in einem Erdschlussfall wahrscheinlich liegt, wenn dieser Phasenwinkel mit dem Phasenwinkel von Nullspannung oder einer damit in einer bekannten Phasenverschiebung vorliegenden Größe verglichen wird, unabhängig davon, ob das elektrische Verteilernetz aus Erde isoliert, am Sternpunkt über eine Resistanz geerdet, mit einer Erdschlusslöschspule von Erdschlussstrom versehen oder eine Kombination der zwei vorherigen ist.

3. Einrichtung zur Detektion einer fehlerhaften Speiseleitung in einem Erdschlussfall in einem elektrischen Verteilernetz, welches elektrische Verteilernetz mehrphasig (L1, L2 und L3) ist und zumindest einen Speisepunkt (HV/MV) mit zumindest zwei Speiseleitungen aufweist, wobei die Einrichtung aufweist:
Mittel zum Messen von Spannung zwischen der Erde und dem Netzsternpunkt, d.h. Nullspannung,
Mittel zum Messen eines Summenstroms (ΣI1, ΣI2) der Speiseleitungsphasen (L1, L2 und L3), d.h. Nullstroms, speiseleitungsspezifisch,
Mittel zum Vergleichen eines Phasenwinkels des Nullstroms der Speiseleitung (ΣI1, ΣI2) mit einem Phasenwinkel von Nullspannung speiseleitungsspezifisch,
wobei die Einrichtung angeordnet ist, eine Speiseleitung als fehlerhaft zu detektieren, falls der Phasenwinkel des Nullstroms der Speiseleitung (ΣI1, ΣI2), verglichen mit dem Phasenwinkel von Nullspannung oder einer damit in einer bekannten Phasenverschiebung vorliegenden Größe, innerhalb eines gewissen vorbestimmten Bereichs ist, **dadurch gekennzeichnet, dass** die Einrichtung angeordnet ist, den vorbestimmten Bereich einzustellen, wesentlich 180° zu überschreiten, und denselben vorbestimmten Bereich für Detektieren einer fehlerhaften Speiseleitung in zumindest zwei der folgenden alternativen Sternpunktbehandlungsverfahren des elektrischen Verteilernetzes einzusetzen: ein aus Erde isoliertes Netz, ein am Sternpunkt über eine Resistanz geerdetes Netz, ein mit einer Erdschlusslöschspule von Erdschlussstrom versehenes Netz oder eine Kombination der zwei vorherigen.

4. Einrichtung nach Anspruch 3, **dadurch gekennzeichnet, dass** die Einrichtung angeordnet ist, den vorbestimmten Bereich einzustellen, den ganzen Winkelbereich zu bedecken, wo der Phasenwinkel von Nullstrom (ΣI1, ΣI2) einer fehlerhaften Speiseleitung in einem Erdschlussfall wahrscheinlich liegt, wenn dieser Phasenwinkel mit dem Phasenwinkel von Nullspannung oder einer damit in einer bekannten Phasenverschiebung vorliegenden Größe verglichen wird, unabhängig davon, ob das elektrische Verteilernetz aus Erde isoliert, am Sternpunkt über eine Resistanz geerdet, mit einer Erdschlusslöschspule von Erdschlussstrom versehen oder eine Kombination der zwei vorherigen ist.

5. Einrichtung nach Anspruch 2 oder 3, **dadurch gekennzeichnet, dass** die den vorbestimmten Bereich bestimmenden Grenzwinkel unabhängig einstellbar sind.

## Revendications

1. Procédé pour détecter une ligne d'alimentation électrique défectueuse dans une situation de défaut à la terre au sein d'un réseau de distribution électrique, le réseau de distribution électrique étant un réseau multi-phases et comportant au moins un point d'alimentation présentant au moins deux lignes d'alimentation électrique, le procédé comportant les étapes ci-dessous consistant à :
mesurer une tension entre un point neutre du réseau de distribution électrique et la terre, c'est-à-dire, un tension nulle ou une variable dans un déphasage connu afférent ; tel qu'un courant d'impédance de point neutre ou un courant d'alimentation nul,
mesurer, spécifiquement pour la ligne d'alimentation électrique, un courant de somme de phases de ligne d'alimentation électrique, c'est-à-dire, un courant nul,
comparer, spécifiquement pour la ligne d'alimentation électrique, un angle de phase du courant nul de ligne d'alimentation électrique avec un angle de phase de tension nulle,
détecter une ligne d'alimentation électrique défectueuse lorsque l'angle de phase du courant nul de ligne d'alimentation électrique se situe dans une plage prédéterminée donnée lorsque il est comparé à l'angle de phase de tension nulle ou de la variable dans un déphasage connu afférent,
**caractérisé en ce que**
ladite plage prédéterminée est définie de manière à dépasser sensiblement 180° et la même plage prédéterminée peut être utilisée pour détecter une ligne d'alimentation électrique défectueuse au moins selon deux des procédés de traitement de point neutre alternatifs suivants dans un réseau de distribution électrique : un réseau isolé de la terre, un réseau mis à la terre via une résistance au niveau du point neutre, un réseau pourvu d'une bobine d'extinction de courant de défaut à la terre ou une combinaison des deux précédents.

2. Procédé selon la revendication 1, **caractérisé en ce que** ladite plage prédéterminée est définie de manière à couvrir la zone d'angle complète où, dans une situation de défaut à la terre, l'angle de phase de courant nul d'une ligne d'alimentation électrique défectueuse sera vraisemblablement situé, lorsqu'est comparé ledit angle de phase à celui de tension nulle ou d'une variable dans un déphasage connu afférent, de manière indépendante du réseau de distribution électrique qui est isolé de la terre, mis à la terre via une résistance au niveau du point neutre, pourvu d'une bobine d'extinction de courant à la terre ou une combinaison des deux précédents.

3. Équipement pour détecter une ligne d'alimentation électrique défectueuse dans une situation de défaut à la terre au sein d'un réseau de distribution électrique, le réseau de distribution électrique étant un réseau multi-phases (L1, L2 et L3) et comportant au moins un point d'alimentation (HV/MV) présentant au moins deux lignes d'alimentation électrique, l'équipement comportant :
des moyens permettant de mesurer une tension entre la terre et un point neutre du réseau de distribution électrique, c'est-à-dire, une tension nulle,
des moyen permettant de mesurer, spécifiquement pour la ligne d'alimentation électrique, un courant de somme (ΣI1,ΣI2) des phases de ligne d'alimentation électrique (L1, L2 et L3), c'est-à-dire un courant nul,
des moyens permettant de comparer un angle de phase du courant nul de ligne d'alimentation électrique (ΣI1,ΣI2) avec un angle de phase de tension nulle, spécifiquement pour la ligne d'alimentation électrique,
l'équipement étant agencé de manière à détecter une ligne d'alimentation électrique défectueuse, lorsque l'angle de phase du courant nul de ligne d'alimentation électrique (ΣI1,ΣI2) tel que comparé à l'angle de phase de tension nulle ou d'une variable dans un déphasage connu afférent, se situe dans une plage prédéterminée donnée, **caractérisé en ce que**
l'équipement est agencé pour définir ladite plage prédéterminée pour qu'elle dépasse sensiblement 180° et utiliser la même plage prédéterminée pour détecter une ligne d'alimentation électrique défectueuse au moins selon deux des procédés de traitement de point neutre alternatifs suivants du réseau de distribution électrique : un réseau isolé de la terre, un réseau mis à la terre via une résistance au niveau du point neutre, un réseau pourvu d'une bobine d'extinction de courant de défaut à la terre ou une combinaison des deux précédents.

4. Équipement selon la revendication 3, **caractérisé par** l'étape consistant à définir ladite plage prédéterminée de manière à ce qu'elle couvre la zone d'angle complète où, dans une situation de défaut à la terre, l'angle de phase de courant nul (ΣI1,ΣI2) d'une ligne d'alimentation électrique défectueuse sera vraisemblablement situé, lorsqu'est comparé ledit angle de phase à celui de tension nulle ou d'une variable dans un déphasage connu afférent, de manière indépendante du réseau de distribution électrique qui est isolé de la terre, mis à la terre via une résistance au niveau du point neutre, pourvu d'une bobine d'extinction de courant à la terre ou une combinaison des deux précédents.

5. Équipement selon la revendication 2 ou 3, **caractérisé en ce que** les angles de bordure limitant ladite plage prédéterminée sont réglables de manière indépendante.
